# EUROPEAN PATENT APPLICATION

(11) **EP 4 564 654 A1**
(43) Date of publication of application: **04.06.2025**
(21) Application number: 22958357.0
(22) Date of filing: 13.09.2022
(51) Int. Cl.: H02K 11/00, H02K 1/27

(54) **MOTOR AND ROTOR THEREOF**

(71) Applicant: Contemporary Amperex Intelligence Technology (Shanghai) Limited, Shanghai 201306 (CN)
(72) Inventor: WU, Kai, Shanghai 200120 (CN)
(74) Representative: Ran, Handong
(86) International application number: PCT/CN2022/118486
(87) International publication number: WO 2024/055163

(57) **Abstract**

A motor and a rotor (10) thereof. The rotor (10) comprises a support member (11), a magnetic conductive member (12), and permanent magnets (13). The magnetic conductive member (12) is arranged on at least one side of the support member (11) along the axial direction of the rotor (10) and is fixedly connected to the support member (11). The permanent magnets (13) are connected to the magnetic conductive member (12). The rotor (10) provided in the present application has the magnetic conductive member (12) and the support member (11). The magnetic conductive member (12) increases magnetic induction intensity. The support member (11) provides a certain supporting effect for the magnetic conductive member (12) and the permanent magnets (13), which is beneficial for increasing the output speed of rotation and torque of the rotor (10) and increasing the operational stability of the rotor (10). Furthermore, by means of configuring the support member (11) to be fixedly connected to the magnetic conductive member (12), the connection strength of the support member (11) and the magnetic conductive member (12) can be increased, thereby increasing the overall structural strength of the rotor (10). Under a working condition in which the rotor (10) operates at a high speed, the risk of the support member (11) and the magnetic conductive member (12) generating relative movement can be reduced, which is beneficial for increasing the highest speed of rotation of the rotor (10) and operational stability under high-speed operation.

## Description

### TECHNICAL FIELD

This application relates to the field of motor technology, and more specifically, to a motor and a rotor thereof.

### BACKGROUND

As a device of converting electrical energy into mechanical energy, motors are widely used in electronic devices, such as mobile phones, laptops, electric bicycles, electric cars, electric planes, electric ships, electric toy cars, electric toy ships, electric toy planes, and electric tools.

In the development of motor technology, in addition to improving the performance of motors, how to improve the maximum revolution speed of motors is a technical issue that requires continuous improvement in motor technology.

### SUMMARY

This application provides a motor and a rotor thereof, to improve the maximum revolution speed of the motor.

According to a first aspect, an embodiment of this application provides a rotor of a motor, including a support member, a magnetic conduction member, and a permanent magnet, where the magnetic conduction member is provided on at least one side of the support member along an axial direction of the rotor and fixedly connected to the support member; and the permanent magnet is connected to the magnetic conduction member.

The rotor provided in the embodiment of this application has a magnetic conduction member and a support member. The magnetic conduction member is used to increase the magnetic induction intensity, and the support member is used to provide some support for the magnetic conduction member and the permanent magnet and output the torque and revolution speed of the rotor, helping to increase the output torque and revolution speed of the rotor and improving the operational stability of the rotor. Additionally, the support member is fixedly connected to the magnetic conduction member, which helps to improve the connection strength between the support member and the magnetic conduction member, enhancing the overall structural strength of the rotor. Thus, under high-speed operation of the rotor, the risk of relative movement between the support member and the magnetic conduction member can be reduced, improving the maximum revolution speed of the rotor and the structural stability under high-speed operation.

In some embodiments, the magnetic conduction member is welded to the support member; and/or the permanent magnet is welded to the magnetic conduction member. This helps to further improve the connection strength between the magnetic conduction member and the support member, helping to improve the revolution speed of the rotor and the operational stability of the rotor under high-speed operation.

In some embodiments, one of the support member and the magnetic conduction member has protrusions, and the other has grooves, the protrusions and the grooves fitting with each other. In this way, the magnetic conduction member and the support member can be mutually positioned along the circumferential direction of the rotor, reducing the risk of the magnetic conduction member and the support member moving in the rotational direction during rotor operation, thus improving the overall structural strength of the rotor.

In some embodiments, the multiple protrusions extend along a radial direction of the rotor and are spaced apart along a circumferential direction of the rotor, and the multiple grooves are in one-to-one correspondence with the multiple protrusions. In this way, during the rotation of the rotor, the boss limits the support member and the magnetic conduction member along the circumferential direction, and the multiple protrusions are spaced apart along the circumferential direction, helping to further reduce the risk of relative displacement between the support member and the magnetic conduction member along the circumferential direction, and improving the structural stability of the rotor.

In some embodiments, the groove extends through the support member along the axial direction; or the groove extends through the magnetic conduction member along the axial direction. With the groove extending through the support member or the magnetic conduction member along the axial direction, the size of the protrusion inserted into the groove is increased, and the fitting area between the protrusion and the groove is increased, further improving the connection strength between the support member and the magnetic conduction member.

In some embodiments, the protrusion is welded to the groove. This helps to further improve the connection strength between the support member and the magnetic conduction member, thus enhancing the overall structural strength of the rotor.

In some embodiments, the magnetic conduction member is ring-shaped and includes multiple magnetic conduction sub-members, where the magnetic conduction sub-members is annular sector-shaped and spaced apart along the circumferential direction of the rotor, and the permanent magnet is arranged between the adjacent magnetic conduction sub-members. The spoke-like arrangement of the permanent magnets is beneficial to enhancing the overall magnetic concentration capability of the permanent magnets and reducing the eddy current loss of the permanent magnets, thus improving the torque of the rotor and the efficiency of converting electrical energy into mechanical energy.

In some embodiments, the magnetic conduction member is ring-shaped, and the magnetic conduction member has multiple accommodating chambers, where the accommodating chambers extend through the magnetic conduction member along the radial direction of the rotor, and the multiple accommodating chambers are spaced apart along the circumferential direction of the rotor, each accommodating chamber being provided with the permanent magnet. This helps to improve the connection strength between the permanent magnets and the magnetic conduction member, reduces the risk of the permanent magnets loosening relative to the magnetic conduction member, and helps to increase the centrifugal force that the permanent magnets can withstand, thus improving the revolution speed of the rotor. Additionally, the built-in permanent magnet has low eddy current loss, which is conducive to improving the working efficiency of the motor when the rotor is applied to the motor.

In some embodiments, the accommodating chamber is annular sector-shaped, and the permanent magnet is annular sector-shaped and fits with the accommodating chamber. This helps to further increase the fitting area between the permanent magnet and the magnetic conduction member, thus improving the connection strength between the permanent magnet and the magnetic conduction member. Additionally, with the permanent magnet provided as fan-shaped, the eddy current loss of the permanent magnet can be reduced, helping to improve the efficiency of a motor when the rotor is applied to the motor.

In some embodiments, the magnetic conduction member further has a hollow groove, the hollow groove being provided on at least one side of the accommodating chamber along the circumferential direction of the rotor; and the rotor further includes a filling member, the filling member being made of a non-magnetic conduction material and filled in the hollow groove. For the magnetic field generated by the stator distributed along the axial direction of the rotor, provision of the hollow groove can change the distribution of the magnetic field and improve the torque of the rotor. Provision of the filling member to fill the hollow groove is beneficial to maintaining the overall structural strength of the magnetic conduction member.

In some embodiments, the accommodating chamber includes a first sub-chamber and a second sub-chamber spaced apart along the axial direction, where the first sub-chamber is located on a side of the second sub-chamber facing away from the support member, and the first sub-chamber and the second sub-chamber are both provided with the permanent magnet. When the rotor is used in a motor, such arrangement helps to improve the sinusoidality of the air gap magnetic field, increase the torque of the rotor, reduce torque pulsation, and improve the NVH performance of the rotor.

In some embodiments, both the first sub-chamber and the second sub-chamber are annular sector-shaped, a central angle corresponding to the first sub-chamber is smaller than a central angle corresponding to the second sub-chamber, and central planes of the first sub-chamber and the second sub-chamber disposed opposite each other along the axial direction overlap. In this way, in a case that the magnetic field generated by the stator passes through the rotor along the circumferential direction of the rotor, the magnetic field lines pass through the permanent magnet in the first sub-chamber and then the permanent magnet in the second sub-chamber. This further helps to improve the distribution of the motor magnetic field, increase the torque, reduce the torque pulsation, and improve the NVH performance of the motor.

In some embodiments, the magnetic conduction member is provided on two sides of the support member along the axial direction, and the multiple permanent magnets are connected to the magnetic conduction member; and the rotor has a central plane, where the central plane is perpendicular to the axial direction, and the support member, the magnetic conduction member, and the multiple permanent magnets are symmetrically arranged with respect to the central plane. The permanent magnets and magnetic conduction members are symmetrically arranged with respect to the central plane, so the axial forces on the symmetrically arranged permanent magnets and magnetic conduction members are essentially the same in magnitude but opposite in direction, and can cancel each other out, making the axial forces on the rotor essentially zero, and facilitating the balance of the axial forces on the rotor.

In some embodiments, the support member includes a support ring and a support plate, where the support ring is ring-shaped and extends along the axial direction, the support plate is plate-shaped and provided at an end of the support ring along the axial direction, and the magnetic conduction member sleeves the support ring; and along the axial direction, the support ring has a first end face far from a side of the support plate, the rotor has a second end face far from the side of the support plate, and a distance between the first end face and the support plate is smaller than a distance between the second end face and the support plate. Such arrangement helps to further improve the connection strength between the support member and the magnetic conduction member. Moreover, the end faces of the support member and the air gap interfaces are alternately arranged, with the end faces of the support member not extending beyond the air gap interfaces, which helps to reduce the eddy current loss generated by the support member and further improve the efficiency of the motor.

According to a second aspect, an embodiment of this application provides a motor including the rotor according to any embodiment of the first aspect.

The motor provided in the embodiments of this application uses the rotor provided in any one of the foregoing embodiments, so the same technical effects can be achieved. Details are not repeated herein.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a rotor provided in an embodiment of this application;
FIG. 2 is an exploded view of a rotor provided in an embodiment of this application;
FIG. 3 is an exploded view of a rotor provided in another embodiment of this application;
FIG. 4 is a schematic structural diagram of a magnetic conduction sub-member in FIG. 3;
FIG. 5 is a schematic structural diagram of a support member in FIG. 3;
FIG. 6 is an exploded view of a rotor provided in still another embodiment of this application;
FIG. 7 is a schematic structural diagram of a rotor provided in another embodiment of this application;
FIG. 8 is an exploded view of a rotor provided in yet another embodiment of this application;
FIG. 9 is a schematic structural diagram of a magnetic conduction member in FIG. 8;
FIG. 10 is a front view of a partial structure of the rotor shown in FIG. 8;
FIG. 11 is a front view of a partial structure of the magnetic conduction member in FIG. 9;
FIG. 12 is a schematic structural diagram of a magnetic conduction member in a rotor provided in an embodiment of this application;
FIG. 13 is a schematic exploded view of a rotor provided in an embodiment of this application;
FIG. 14 is a schematic exploded view of another rotor provided in an embodiment of this application;
FIG. 15 is a schematic structural diagram of yet another rotor provided in an embodiment of this application;
FIG. 16 is a schematic structural diagram of a support member of the rotor shown in FIG. 15; and
FIG. 17 is a schematic structural diagram of a magnetic conduction sub-member of the rotor shown in FIG. 15.

The accompanying drawings are not drawn to scale.

Description of reference signs:
10. rotor; 10a. protrusion; 10b. groove; 10c. second end face; 11. support member; 111. support ring; 111a. first end face; 112. support plate; 12. magnetic conduction member; 12a. accommodating chamber; 121a. first sub-chamber; 122a. second sub-chamber; 12b. hollow groove; 121. magnetic conduction sub-member; 122. magnetic isolation portion; 13. permanent magnet; 14. filling member;
X. axial direction; Y. circumferential direction; and Z. radial direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, C and/or D may indicate three cases: presence of only C; presence of both C and D; and presence of only D. In addition, the character "/" in this application generally indicates an "or" relationship between the contextually associated objects.

In the embodiments of this application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

A motor typically includes a stator and a rotor. The stator typically includes an iron core and a coil. Once current is introduced to the coil, a magnetic field is generated. The rotor includes a permanent magnet, and the permanent magnet rotates under the Lorentz force in the magnetic field, thus converting electrical energy into mechanical energy.

As the revolution speed of the motor increases, the stability of the motor significantly deteriorates, which limits further improvement in the revolution speed of the motor. After discovering this problem, the inventors have conducted systematic analysis and research on the structure and operating conditions of the motor. The result shows that during operation of the motor, the rotor is subjected to a large centrifugal force. The rotor typically includes a magnetic conduction member and a support member that are connected to each other. Due to the relative movement between the magnetic conduction member and the support member caused during the operation of the rotor, especially under high-speed operation, the increase of the revolution speed of the rotor is limited.

In view of this, the inventors improved the structure of the rotor. The technical solutions described in the embodiments of this application are applicable to a rotor and a motor using such rotor.

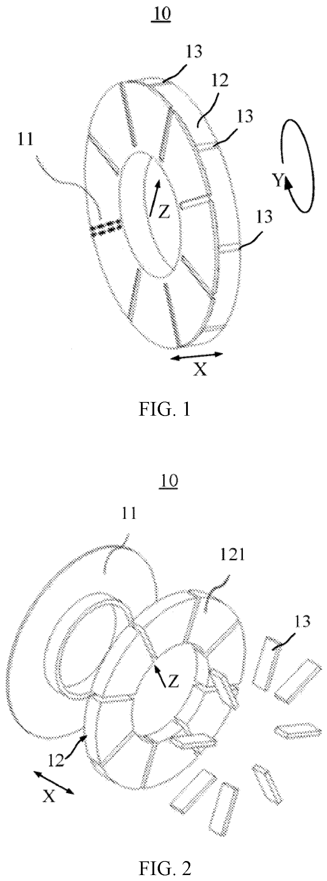

As shown in FIGs. 1 and 2, an embodiment of this application provides a rotor 10 of a motor. The rotor 10 includes a support member 11, a magnetic conduction member 12, and a permanent magnet 13. The magnetic conduction member 12 is provided on at least one side of the support member 11 along an axial direction X of the rotor 10 and is fixedly connected to the support member 11. The permanent magnet 13 is connected to the magnetic conduction member 12.

The rotor 10 may include one permanent magnet 13, or the rotor 10 may be provided with multiple permanent magnets 13. Located in a magnetic field generated by a stator, the permanent magnet 13 is subjected to a Lorentz force which generates torque on the permanent magnet 13, causing the permanent magnet 13 to rotate. The rotation of the permanent magnet 13 drives the magnetic conduction member 12 and the support member 11 to rotate.

The magnetic conduction member 12 may be made of a magnetic conduction material, such as iron. With the magnetic conduction member 12 located in the magnetic field generated by the stator of the motor, the magnetic induction intensity can be enhanced, helping to increase the torque on the permanent magnet 13 and increasing the output torque of the motor.

The support member 11 may be made of any non-magnetic conduction material. For example, the support member 11 may be made of any one of high-strength nickel alloy, stainless steel, aluminum alloy, titanium alloy, magnesium alloy, and the like to reduce the magnetic leakage of the rotor 10 while ensuring high strength for the rotor 10.

The support member 11 and the magnetic conduction member 12 may be in any shape. For example, the support member 11 is circular plate-shaped, and the magnetic conduction member 12 is disc-shaped.

Optionally, the support member 11 may be of an integral structure, or the support member 11 may be of a segmented structure. Similarly, the magnetic conduction member 12 may be of an integral structure, or the magnetic conduction member 12 may be of a segmented structure.

The magnetic conduction member 12 is fixedly connected to the support member 11, and they can be connected by snap-fit connection, welding connection, threaded connection, riveted connection, bonded connection, or the like, all of which can improve the connection strength between the magnetic conduction member 12 and the support member 11.

While the support member 11 provides some support for the magnetic conduction member 12 and the permanent magnet 13, the support member 11 can also be connected to an output shaft of the rotor 10 to output the revolution speed and torque of the motor through the output shaft. In this case, with the magnetic conduction member 12 connected to the output shaft of the rotor 10 through the support member 11, the magnetic induction intensity generated by the stator of the motor can be enhanced through the magnetic conduction member 12, and the revolution speed and torque of the rotor 10 can also be output through the support member 11. This helps to enhance the stability of the output torque and revolution speed of the rotor 10 while improving the torque and revolution speed of the rotor 10.

The permanent magnet 13 is connected to the magnetic conduction member 12. The permanent magnet 13 may be connected to a surface of the magnetic conduction member 12, that is, a surface-mounted permanent magnet; or the permanent magnet 13 is connected to the interior of the magnetic conduction member 12, that is, a built-in permanent magnet. Optionally, the permanent magnet 13 and the magnetic conduction member 12 may be connected by snap-fit connection, welding connection, threaded connection, riveted connection, bonded connection, or the like.

Optionally, the permanent magnet 13 may be arranged in any form on the magnetic conduction member 12. For example, the permanent magnets 13 may be distributed in a spoke pattern along a circumferential direction Y of the rotor 10.

Optionally, the magnetic conduction member 12 and the permanent magnet 13 may be provided on one side of the support member 11 along the axial direction X of the rotor 10, or the magnetic conduction member 12 and the permanent magnet 13 may be provided on both sides of the support member 11 along the axial direction X of the rotor 10, which is not limited herein and can be selected according to actual needs.

The permanent magnet 13 may include an iron core. The iron core may be formed by powder metallurgy molding, or the iron core may be formed by winding and curing of viscous silicon steel sheets. The viscosity of the silicon steel sheets may be implemented by glue application during winding, or the silicon steel sheets themselves may be viscous.

In an embodiment where the iron core is formed by winding of viscous silicon steel sheets, costs are reduced, and the eddy current loss of the iron core is reduced.

According to the rotor 10 provided in the embodiments of this application, the rotor 10 is configured with the magnetic conduction member 12 and a support member 11. The magnetic conduction member 12 is used to increase the magnetic induction intensity, the support member 11 is used to provide some support for the magnetic conduction member 12 and the permanent magnet 13, and the support member 11 is also used to output the torque and revolution speed of the rotor 10, helping to increase the output torque and revolution speed of the rotor 10 and improving the operational stability of the rotor 10. Additionally, the support member 11 is fixedly connected to the magnetic conduction member 12, which helps to improve the connection strength between the support member 11 and the magnetic conduction member 12, enhancing the overall structural strength of the rotor 10. Thus, under high-speed operation of the rotor 10, the risk of relative movement between the support member 11 and the magnetic conduction member 12 can be reduced, helping to improve the maximum revolution speed of the rotor 10 and the structural stability under high-speed operation.

In some embodiments, the magnetic conduction member 12 is welded to the support member 11.

The welding of the magnetic conduction member 12 and the support member 11 may be laser welding, brazing, resistance welding, friction welding, diffusion welding, or the like.

The magnetic conduction member 12 is welded to the support member 11, which helps to further improve the connection strength between the magnetic conduction member 12 and the support member 11, thus helping to improve the revolution speed of the rotor 10 and the stability of the rotor 10 under high-speed operation.

For example, the magnetic conduction member 12 and the support member 11 may be welded by zinc-based brazing, which can lower the brazing temperature and protect the magnetic properties of the permanent magnet 13.

In some embodiments, the permanent magnet 13 is welded to the magnetic conduction member 12.

The welding of the permanent magnet 13 and the magnetic conduction member 12 may be laser welding, brazing, resistance welding, friction welding, diffusion welding, or the like.

The permanent magnet 13 is welded to the magnetic conduction member 12, which helps to further improve the connection strength between the magnetic conduction member 12 and the permanent magnet 13, thus helping to improve the revolution speed of the rotor 10 and the stability of the rotor 10 under high-speed operation.

Optionally, the permanent magnet 13 and the support member 11 may be connected on a plane or through a concave-convex structure, which can be specifically selected according to actual needs.

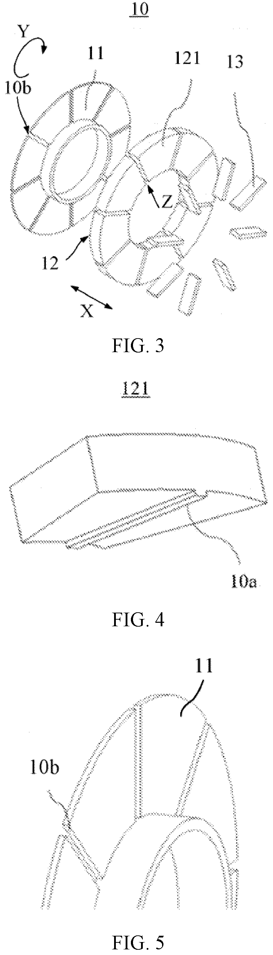

As shown in FIG. 3, in some embodiments, one of the support member 11 and the magnetic conduction member 12 has protrusions 10a, and the other has grooves 10b, the protrusions 10a and the grooves 10b fitting with each other.

Optionally, the groove 10b may be in a shape of a strip, a square, or the like. For example, as shown in FIG. 3, the groove 10b may extend along a radial direction Z of the rotor 10 and have openings at both ends along the radial direction Z, or the groove 10b may have no openings along a circumferential side perpendicular to the axial direction X and have openings only on one side or both sides in the axial direction X. The protrusion 10a may be in any shape that fits with the shape of the groove 10b, which can be specifically selected according to the shape. For example, the protrusion 10a may have the same shape as the groove 10b, and the two are interference-fitted.

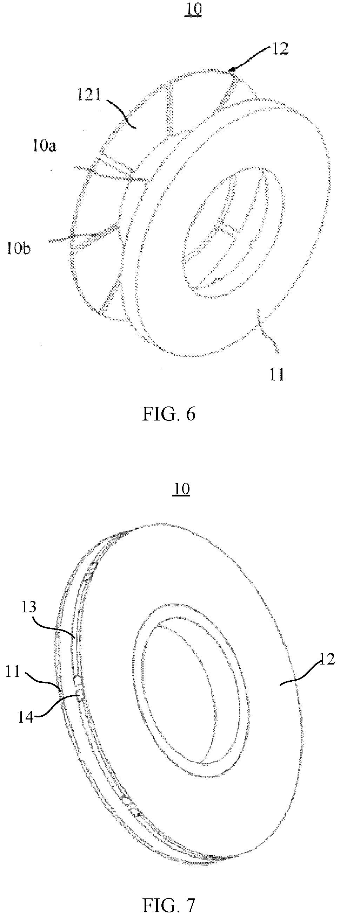

Optionally, the support member 11 may be provided with the protrusions 10a, and the magnetic conduction member 12 may be provided with the grooves 10b; or the support member 11 may be provided with the grooves 10b, and the magnetic conduction member 12 may be provided with the protrusions 10a. For example, FIGs. 3, 4, and 5 show embodiments where the support member 11 has grooves 10b and the magnetic conduction member 12 has protrusions 10a. FIG. 6 shows an embodiment where the support member 11 has protrusions 10a and the magnetic conduction member 12 has grooves 10b. The protrusions 10a are snap-fitted into the grooves 10b to implement positioning of the magnetic conduction member 12 and the support member 11 along the circumferential direction Y of the rotor 10.

Optionally, the protrusion 10a and the groove 10b may be connected only by snap-fit connection, or the protrusion 10a and the groove 10b may be connected as a whole by bonding, welding, or the like, to further increase the connection area between the support member 11 and the magnetic conduction member 12, thus improving their connection strength.

Therefore, with the support member 11 connected to the magnetic conduction member 12 through the fitting between the protrusions 10a and the grooves 10b, the magnetic conduction member 12 and the support member 11 can be mutually positioned along the circumferential direction Y of the rotor 10, reducing the risk of the magnetic conduction member 12 and the support member 11 moving in the rotational direction during the operation of the rotor 10, thus improving the overall structural strength of the rotor 10.

Optionally, one of the support member 11 and the magnetic conduction member 12 may be formed with a groove 10b, and the other may be formed with a protrusion 10a that fits with the groove 10b; or one of the support member 11 and the magnetic conduction member 12 may be formed with multiple grooves 10b, and the other may be formed with multiple protrusions 10a that fit with the grooves 10b, which can be specifically selected according to actual needs.

The multiple protrusions 10a and grooves 10b can be arranged in any form to achieve the purpose of improving the connection strength between the support member 11 and the magnetic conduction member 12.

In some embodiments, as shown in FIGs. 3 and 4, multiple protrusions 10a extend along the radial direction Z of the rotor 10 and are spaced apart along the circumferential direction Y of the rotor 10. The multiple grooves 10b are in one-to-one correspondence with the multiple protrusions 10a.

The multiple protrusions 10a may be evenly spaced apart along the circumferential direction Y of the rotor 10. Certainly, they may alternatively be unevenly spaced apart. The grooves 10b are in one-to-one correspondence with the protrusions 10a, so each groove 10b has a protrusion 10a fitting with it, and each protrusion 10a has a groove 10b fitting with it.

With the protrusions 10a extending along the radial direction Z of the rotor 10, during the rotation of the rotor 10, the boss limits the support member 11 and the magnetic conduction member 12 along the circumferential direction Y. Additionally, with the multiple protrusions 10a spaced apart along the circumferential direction Y, the risk of relative displacement between the support member 11 and the magnetic conduction member 12 along the circumferential direction Y can be reduced, improving the structural stability of the rotor 10.

Optionally, the groove 10b may extend through part of the support member 11 or the magnetic conduction member 12 along the axial direction X, or the groove 10b extend through the support member 11 or the magnetic conduction member 12 along the axial direction X. FIG. 6 shows an embodiment where the groove 10b extends through the magnetic conduction member 12 along the axial direction.

In some embodiments, along the axial direction X, the groove 10b extends through the support member 11, or along the axial direction X, the groove 10b extends through the magnetic conduction member 12.

In the embodiment where the groove 10b is provided in the support member 11, the groove 10b extends through the support member 11 along the axial direction X. In the embodiment where the groove 10b is provided in the magnetic conduction member 12, the groove 10b extends through the magnetic conduction member 12 along the axial direction X.

With the groove 10b extending through the support member 11 or the magnetic conduction member 12 along the axial direction X, the size of the protrusion 10a inserted into the groove 10b can be increased, thus increasing the fitting area between the protrusion 10a and the groove 10b, and further improving the connection strength between the support member 11 and the magnetic conduction member 12.

In some embodiments, the protrusion 10a is welded to the groove 10b.

For example, the protrusion 10a and the groove 10b may be welded by laser welding, brazing, resistance welding, friction welding, diffusion welding, or the like.

With the protrusion 10a welded to the groove 10b, the connection strength between the support member 11 and the magnetic conduction member 12 can be further improved, thus improving the overall structural strength of the rotor 10.

The magnetic conduction members 12 can be integrally presented as a continuous ring. The continuously arranged magnetic conduction members 12 can effectively overcome their own centrifugal force during the operation of the rotor 10.

In some embodiments, a flange structure is provided on the circumferential side of the support member 11, and a thickness of the flange may be 1 mm to 3 mm. After the assembly process of the rotor 10 is complete, a dynamic balance test is performed on the rotor 10. According to the result of the dynamic balance test, drilling or milling operations are performed at appropriate positions on the flange so that the rotational center line and geometric center line of the rotor 10 are as coincident as possible, thus reducing the centrifugal couple during the operation of the rotor 10 and further improving the stability of the rotor 10 during operation.

As shown in FIG. 2, in some embodiments, the magnetic conduction member 12 is ring-shaped and includes multiple magnetic conduction sub-members 121. The magnetic conduction sub-members 121 are annular sector-shaped and are spaced apart along the circumferential direction Y of the rotor 10, and the permanent magnet 13 is arranged between the adjacent magnetic conduction sub-members 121.

In this way, the permanent magnet 13 extends along the radial direction Z of the rotor 10 and can be annular sector-shaped to fill between adjacent magnetic conduction sub-members 121. The multiple permanent magnets 13 are spaced apart along the circumferential direction Y of the rotor 10, forming a spoke-like arrangement.

It can be understood that the spoke-like arrangement of the permanent magnets 13 is conducive to enhancing the overall magnetic concentration capability of the permanent magnets 13 and reducing the eddy current loss of the permanent magnets 13, thus increasing the torque of the rotor 10 and the efficiency of converting electrical energy into mechanical energy.

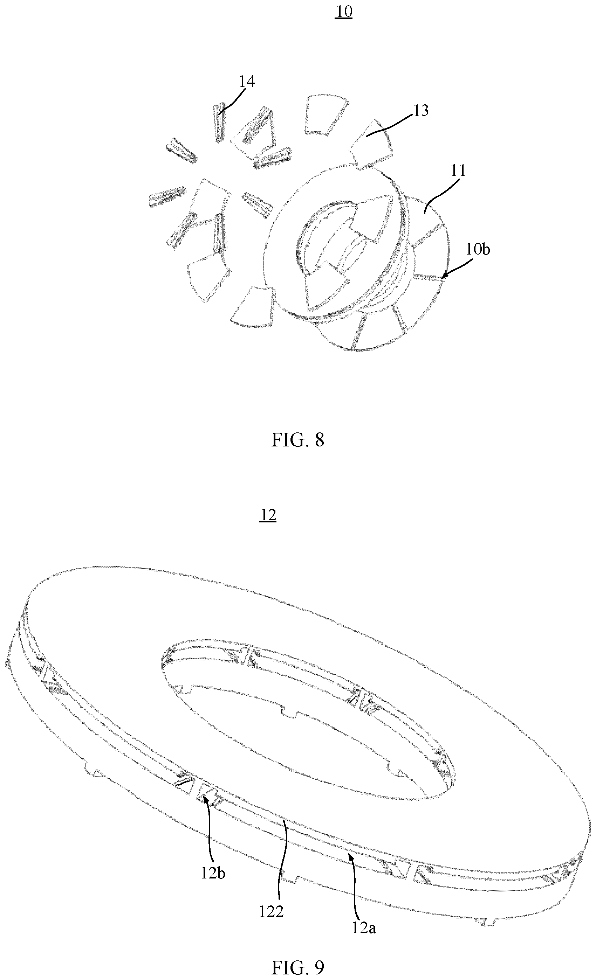

As shown in FIGs. 7 to 11, in some embodiments, the magnetic conduction member 12 is ring-shaped, and the magnetic conduction member 12 has multiple accommodating chambers 12a. The accommodating chambers 12a extend through the magnetic conduction member 12 along the radial direction Z of the rotor 10. The multiple accommodating chambers 12a are spaced apart along the circumferential direction Y of the rotor 10, and each accommodating chamber 12a is provided with the permanent magnet 13.

In this way, the permanent magnets 13 are provided inside the magnetic conduction member 12, which helps to improve the connection strength between the permanent magnet 13 and the magnetic conduction member 12, reduces the risk of the permanent magnets 13 loosening relative to the magnetic conduction member 12, and helps to increase the centrifugal force that the permanent magnets 13 can withstand, thus improving the revolution speed of the rotor 10. Additionally, the built-in permanent magnet 13 has low eddy current loss, which is conducive to improving the working efficiency of the motor when the rotor 10 is applied to the motor.

To enable the permanent magnet 13 to enter the accommodating chamber 12a more smoothly, a guiding boss can be provided inside the accommodating chamber 12a, and a guiding recess can be provided on the permanent magnet 13. Through the fitting between the guiding boss and the guiding recess, the permanent magnet 13 is guided to enter the accommodating chamber 12a, enabling the permanent magnet 13 to smoothly enter the accommodating chamber 12a. Additionally, after the permanent magnet 13 enters the accommodating chamber 12a, the guiding boss and the guiding recess can provide some limiting effect on the permanent magnet 13 and the magnetic conduction member 12, maintaining the stable connection between the two.

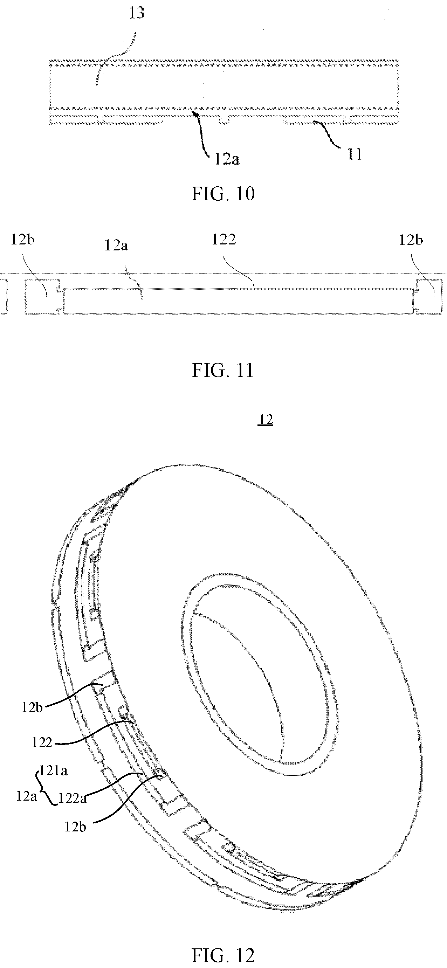

As shown in FIGs. 11 and 12, in some embodiments, the magnetic conduction member 12 has a magnetic isolation portion 122, where the magnetic isolation portion 122 is located on a side of the accommodating chamber 12a facing away from the support member 11. A thickness of the magnetic isolation portion 122 along the axial direction X is 1 mm to 4 mm.

After in-depth research and numerous experiments, the inventors have found that limiting the thickness of the magnetic isolation portion 122 along the axial direction X to 1 mm to 4 mm can maintain a high air gap flux density of the motor while reducing the risk of significant eddy current loss caused by the armature magnetic field directly acting on the permanent magnet 13, thus improving the efficiency of the motor at high speeds.

In some embodiments, the accommodating chamber 12a is annular sector-shaped, and the permanent magnet 13 is annular sector-shaped and fits with the accommodating chamber 12a.

With both the accommodating chamber 12a and the permanent magnet 13 designed as annular sector-shaped and fitting with each other, the fitting area between the permanent magnet 13 and the magnetic conduction member 12 can be further increased, thus improving the connection strength between the permanent magnet 13 and the magnetic conduction member 12. Additionally, with the permanent magnet 13 provided as fan-shaped, the eddy current loss of the permanent magnet 13 can be reduced, helping to improve the efficiency of a motor when the rotor 10 is applied to the motor.

In some embodiments, the magnetic conduction member 12 further has a hollow groove 12b, where the hollow groove 12b is provided on at least one side of the accommodating chamber 12a along the circumferential direction Y of the rotor 10; and the rotor 10 further includes a filling member 14, where the filling member 14 is made of a non-magnetic conduction material and filled in the hollow groove 12b.

The hollow groove 12b may be circular, square, or irregular in shape. A strip-shaped depression may be provided inside the hollow groove 12b, and after the filling member 14 is injection-molded in the hollow groove 12b, a rib is formed in a region corresponding to the depression, which is conducive to improving the connection strength between the filling member 14 and the magnetic conduction member 12.

Optionally, the accommodating chamber 12a may be provided with a hollow groove 12b on one side in the circumferential direction Y, or the accommodating chamber 12a may be provided with hollow grooves 12b on two sides in the circumferential direction Y.

The filling member 14 may be made of any non-magnetic and non-conductive material. For example, the filling member 14 may be made of a plastic material. The filling member 14 may be formed and then filled into the hollow groove 12b, or the filling member 14 may be formed in the hollow groove 12b by an injection molding process.

A region where the magnetic conduction member 12 is provided with the hollow groove 12b is filled with the non-magnetically conductive filling member 14, so the region where the magnetic conduction member 12 corresponds to the hollow groove 12b is not magnetically conductive. Therefore, for the magnetic field generated by the stators distributed along the axial direction X of the rotor 10, provision of the hollow groove 12b can change the distribution of the magnetic field, thus increasing the torque of the rotor 10. Moreover, provision of the filling member 14 to fill the hollow groove 12b is conducive to maintaining the overall structural strength of the magnetic conduction member 12.

FIG. 12 is a schematic structural diagram of a magnetic conduction member 12 in a rotor provided in another embodiment of this application.

As shown in FIG. 12, in some embodiments, the accommodating chamber 12a includes a first sub-chamber 121a and a second sub-chamber 122a spaced apart along the axial direction X. The first sub-chamber 121a is located on a side of the second sub-chamber 122a facing away from the support member 11, and both the first sub-chamber 121a and the second sub-chamber 122a are provided with the permanent magnet 13.

That is, the permanent magnets 13 are spaced apart along the circumferential direction Y and spaced apart along the axial direction X.

It can be understood that there may be one first sub-chamber 121a and one second sub-chamber 122a, or there may be multiple first sub-chambers 121a and multiple second sub-chambers 122a.

The first sub-chamber 121a and the second sub-chamber 122a may correspond to equal central angles, or the first sub-chamber 121a and the second sub-chamber 122a may correspond to different central angles. Correspondingly, the permanent magnets 13 in the first sub-chamber 121a and the second sub-chamber 122a may correspond to equal central angles, or the permanent magnets 13 in the first sub-chamber 121a and the second sub-chamber 122a may correspond to different central angles.

Optionally, the first sub-chamber 121a and the second sub-chamber 122a may be provided with a hollow groove 12b on at least one side along the circumferential direction Y, or one of the first sub-chamber 121a and the second sub-chamber 122a may be provided with a hollow groove 12b on at least one side along the circumferential direction Y. For example, the first sub-chamber 121a and the second sub-chamber 122a may be provided with the hollow grooves 12b on both sides along the circumferential direction Y of the rotor 10.

When the rotor 10 is used in a motor, such arrangement helps to improve the sinusoidality of the air gap magnetic field, increase the torque of the rotor 10, reduce torque pulsation, and improve the NVH performance of the rotor 10.

In some embodiments, both the first sub-chamber 121a and the second sub-chamber 122a are annular sector-shaped, a central angle corresponding to the first sub-chamber 121a is smaller than a central angle corresponding to the second sub-chamber 122a, and central planes of the first sub-chamber 121a and the second sub-chamber 122a opposite each other along the axial direction X overlap.

In this way, in a case that the magnetic field generated by the stator passes through the rotor 10 along the circumferential direction Y of the rotor 10, the magnetic field lines pass through the permanent magnet 13 in the first sub-chamber 121a and then the permanent magnet 13 in the second sub-chamber 122a. This further helps to improve the distribution of the motor magnetic field, increase the torque, reduce the torque pulsation, and improve the NVH performance of the motor.

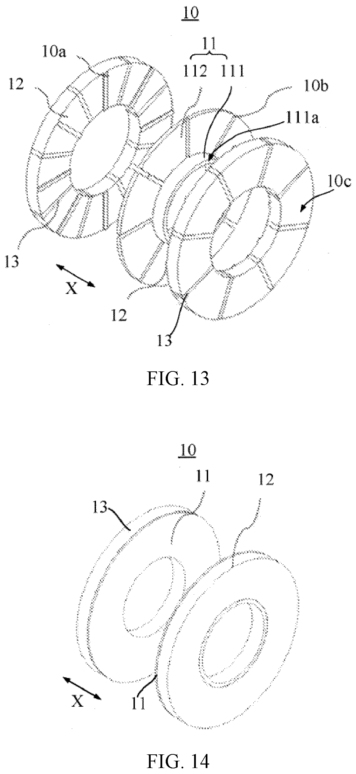

As shown in FIG. 13, in some embodiments, the magnetic conduction members 12 are provided on two sides of the support member 11 along the axial direction X, and multiple permanent magnets 13 are connected to the two magnetic conduction members 12 respectively. The rotor 10 has a central plane, the central plane is perpendicular to the axial direction X, and the support member 11, the magnetic conduction member 12, and the multiple permanent magnets 13 are symmetrically arranged with respect to the central plane.

As shown in FIG. 13, in some optional embodiments, the two magnetic conduction members 12 may be connected to one support member 11, the central plane is located in the middle of the support surface along the axial direction X, and the magnetic conduction member 12 and the permanent magnet 13 connected to the magnetic conduction member 12 are symmetrically arranged with respect to the central plane.

As shown in FIG. 14, in some other optional embodiments, the two magnetic conduction members 12 are connected to two support members 11 respectively, and the two support members 11 are connected to each other and located between the two magnetic conduction members 12. The central plane is located between the two support members 11.

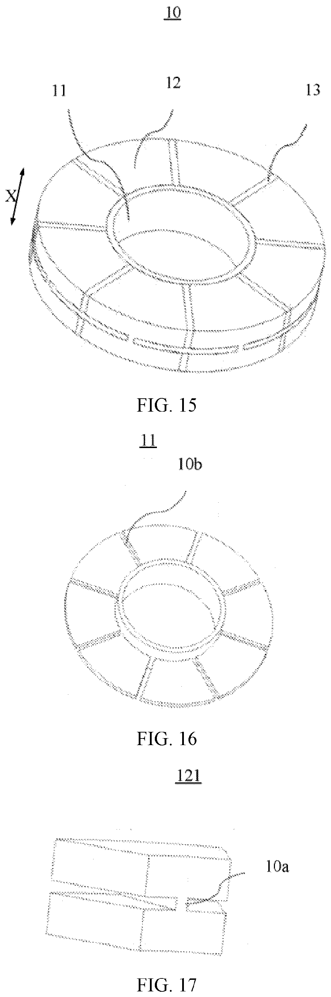

As shown in FIGs. 15 to 17, in still some other optional embodiments, one magnetic conduction member 12 can be inserted into one support member 11, and the magnetic conduction members 12 are symmetrically arranged with respect to the central plane. The permanent magnets 13 are provided on two sides of the magnetic conduction member 12 along the axial direction X, and the permanent magnets 13 are symmetrically arranged with respect to the central plane. Exemplarily, the protrusions 10a on the magnetic conduction member 12 can be inserted into the grooves 10b of the support member 11 to implement the insertion connection between the support member 11 and the magnetic conduction member 12.

During operation in the magnetic field generated by the stator, the rotor 10 may be subject to the Lorentz force along the axial direction X. The multiple permanent magnets 13 and magnetic conduction members 12 are symmetrically arranged with respect to the central plane, so the axial forces on the symmetrically arranged permanent magnets 13 and magnetic conduction members 12 are essentially the same in magnitude and opposite in direction, and can cancel each other out, making the axial force on the rotor 10 essentially zero, thus facilitating the balance of the axial forces on the rotor 10.

Therefore, such arrangement helps to ensure the balance of the rotor 10, further improving the operational stability and NVH performance of the rotor 10.

A motor provided in an embodiment of this application includes the rotor 10 provided in any one of the foregoing embodiments. The motor provided in the embodiment of this application uses the rotor 10 provided in any one of the foregoing embodiments, so the same technical effects can be achieved. Details are not described herein again.

In some embodiments, the motor provided in the embodiment of this application includes a rotor 10. The rotor 10 includes a support member 11, a magnetic conduction member 12, and a permanent magnet 13. The magnetic conduction member 12 is welded to the support member 11, and the magnetic conduction member is welded to the permanent magnet 13. One of the magnetic conduction member 12 and the support member 11 is provided with a groove 10b, and the other is provided with a protrusion 10a. The groove 10b and the protrusion 10a are welded together. Two magnetic conduction members 12 are provided on two sides of the support member 11 along an axial direction X. The magnetic conduction member 12 is ring-shaped and includes multiple annular sector-shaped magnetic conduction sub-members 121. Each magnetic conduction sub-member 121 has an accommodating chamber 12a, and the accommodating chamber 12a includes a first sub-chamber 121a and a second sub-chamber 122a spaced apart along the axial direction X. The first sub-chamber 121a is located on a side of the second sub-chamber 122a facing away from the support member 11, and a central angle corresponding to the first sub-chamber 121a is smaller than a central angle corresponding to the second sub-chamber 122a. The multiple magnetic conduction sub-members 121 are provided in the first sub-chamber 121a and the second sub-chamber 122a, and are shaped according to the first sub-chamber 121a or the second sub-chamber 122a. The first sub-chamber 121a and the second sub-chamber 122a are provided with hollow grooves 12b on two sides along a circumferential direction Y. The hollow groove 12b extends through the magnetic conduction member 12 along a radial direction Z of the rotor 10. A filling member 14 is filled in the hollow groove 12b by injection molding.

As shown in FIG. 13, in some embodiments, the support member 11 includes a support ring 111 and a support plate 112. The support ring 111 is ring-shaped and extends along the axial direction X. The support plate 112 is plate-shaped and is provided at one end of the support ring 111 along the axial direction. The magnetic conduction member 12 sleeves the support ring 111. Along the axial direction, the support ring 111 has a first end face 111a on a side far from the support plate 112, and the rotor 10 has a second end face 10c on a side far from the support plate 112. A distance between the first end face 111a and the support plate 112 is smaller than a distance between the second end face 10c and the support plate 112.

Optionally, the support ring 111 and the support member 112 can be formed separately and then connected by welding, threaded connection, riveting, or the like; or the support ring 111 and the support member 112 can be integrally formed by a stamping process.

The magnetic conduction member 12 sleeves the support ring 111, so the magnetic conduction member 12 can be connected to both a peripheral surface of the support ring 111 and an end face of the support plate 112. For example, the magnetic conduction member 12 is welded to both the peripheral surface of the support ring 111 and the end face of the support plate 112. This helps to further improve the connection strength between the magnetic conduction member 12 and the support member 11.

Depending on the different arrangement positions of the magnetic conduction member 12 and the permanent magnet 13, the second end face 10c may be an end face of the magnetic conduction member 12 on a side far from the support plate 112, or the second end face 10c is an end face of the permanent magnet 13 on a side far from the support plate 112. When the rotor 10 is applied to a motor, the second end face 10c is an air gap interface. The first end face 111a is spaced apart from the air gap interface, with the first end face 111a located on an inner side of the air gap interface close to the rotor 10, helping to reduce the eddy current loss of the support member 11 and improving the efficiency of the motor.

A distance between the first end face 111a and the second end face 10c is not limited and can be selected according to actual needs.

In some embodiments, the permanent magnet 13 on a side close to the second end face 10c has a middle cross-section. The middle cross-section is perpendicular to the axial direction X, the permanent magnets 13 are symmetrically arranged with respect to the middle cross-section, and the first end face 111a overlaps with the middle cross-section of the permanent magnet 13.

Multiple permanent magnets 13 may be provided along the axial direction X, and the permanent magnet 13 on a side close to the second end face 10c is the permanent magnet 113 farthest from the support plate 112, and its middle cross-section overlaps with the first end face 111a.

After in-depth research and numerous experimental analysis, the inventors have found that making the first end face 111a overlap with the middle cross-section of the permanent magnet 13 can minimize the eddy current loss of the support member 11 and improve the efficiency of the motor while ensuring the connection strength between the support member 11 and the magnetic conduction member 12.

A thickness of the support plate 112 is not limited and can be selected according to actual needs.

In some embodiments, the thickness of the support plate 112 along the axial direction X is 3 mm to 10 mm.

For example, the thickness of the support plate 112 may be 3 mm, 3.5 mm, 4 mm, 4.5 mm, 5 mm, 6 mm, 7 mm, 8 mm, 9 mm, 10 mm, or the like.

After in-depth research and numerous experiments, the inventors have found that setting the thickness of the support plate 112 along the axial direction X within the range of 3 mm to 10 mm facilitates stamping of the support plate 112 and the support ring 111 together through a stamping process. This is conducive to simplifying the processing technology of the support member 11.

After further research and experimental analysis, the inventors have found that when the thickness of the support plate 112 is within the range of 3 mm to 5 mm, the stamping process for the support plate 112 and the support ring 111 can be implemented most smoothly.

The motor provided in the embodiment of this application is conducive to improving the maximum revolution speed of the motor and the operational stability and NVH performance under high-speed operation, and is also conducive to reducing the eddy current loss of the rotor 10 and increasing the torque of the rotor 10 and the working efficiency of the motor.

It should be noted that in absence of conflicts, some embodiments and features in some embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in the embodiments of this application.

## Claims

1. A rotor for a motor, comprising:
a support member;
a magnetic conduction member, provided on at least one side of the support member along an axial direction of the rotor and fixedly connected to the support member; and
a permanent magnet, connected to the magnetic conduction member.

2. The rotor according to claim 1, wherein the magnetic conduction member is welded to the support member; and/or the permanent magnet is welded to the magnetic conduction member.

3. The rotor according to claim 1 or 2, wherein one of the support member and the magnetic conduction member has protrusions, and the other has grooves, the protrusions and the grooves fitting with each other.

4. The rotor according to claim 3, wherein the multiple protrusions extend along a radial direction of the rotor and are spaced apart along a circumferential direction of the rotor, and the multiple grooves are in one-to-one correspondence with the multiple protrusions.

5. The rotor according to claim 3 or 4, wherein the groove extends through the support member along the axial direction; or the groove extends through the magnetic conduction member along the axial direction.

6. The rotor according to any one of claims 3 to 5, wherein the protrusion is welded to the groove.

7. The rotor according to any one of claims 1 to 6, wherein the magnetic conduction member is ring-shaped and comprises multiple magnetic conduction sub-members, the magnetic conduction sub-members being annular sector-shaped and spaced apart along the circumferential direction of the rotor, and the permanent magnet is arranged between adj acent magnetic conduction sub-members.

8. The rotor according to any one of claims 1 to 7, wherein the magnetic conduction member is ring-shaped, and the magnetic conduction member has multiple accommodating chambers, wherein the accommodating chambers extend through the magnetic conduction member along the radial direction of the rotor, and the multiple accommodating chambers are spaced apart along the circumferential direction of the rotor, each accommodating chamber being provided with the permanent magnet.

9. The rotor according to claim 8, wherein the accommodating chamber is annular sector-shaped, and the permanent magnet is annular sector-shaped and fits with the accommodating chamber.

10. The rotor according to claim 9, wherein the magnetic conduction member further comprises a hollow groove, the hollow groove being provided on at least one side of the accommodating chamber along the circumferential direction of the rotor; and
the rotor further comprises a filling member, the filling member being made of a non-magnetic conduction material and filled in the hollow groove.

11. The rotor according to any one of claims 8 to 10, wherein the accommodating chamber comprises a first sub-chamber and a second sub-chamber spaced apart along the axial direction, wherein the first sub-chamber is located on a side of the second sub-chamber facing away from the support member, and the first sub-chamber and the second sub-chamber are both provided with the permanent magnet.

12. The rotor according to claim 11, wherein both the first sub-chamber and the second sub-chamber are annular sector-shaped, a central angle corresponding to the first sub-chamber is smaller than a central angle corresponding to the second sub-chamber, and central planes of the first sub-chamber and the second sub-chamber disposed opposite each other along the axial direction overlap.

13. The rotor according to any one of claims 1 to 12, wherein the magnetic conduction member is provided on both sides of the support member along the axial direction, and the multiple permanent magnets are connected to the magnetic conduction member; and
the rotor has a central plane, wherein the central plane is perpendicular to the axial direction, and the support member, the magnetic conduction member, and the multiple permanent magnets are symmetrically arranged with respect to the central plane.

14. The rotor according to any one of claims 1 to 13, wherein the support member comprises a support ring and a support plate, wherein the support ring is ring-shaped and extends along the axial direction, the support plate is plate-shaped and provided at an end of the support ring along the axial direction, and the magnetic conduction member sleeves the support ring; and
along the axial direction, the support ring has a first end face away from a side of the support plate, the rotor has a second end face away from the side of the support plate, and a distance between the first end face and the support plate is smaller than a distance between the second end face and the support plate.

15. A motor, comprising the rotor according to any one of claims 1 to 14.
